Europäisches Patentamt

(19) European Patent Office

Office européen des brevets

(11) Veröffentlichungsnummer: **0 013 557**
**B1**

(12) **EUROPÄISCHE PATENTSCHRIFT**

(45) Veröffentlichungstag der Patentschrift:
27.04.83

(21) Anmeldenummer: 80100021.7

(22) Anmeldetag: 04.01.80

(51) Int. Cl.³: **B 32 B 31/20**, B 30 B 15/06,
B 42 D 15/02, G 06 K 19/08

(54) Verfahren zum Kaschieren von Schichten und Pressvorrichtung mit zwei Platten zur Durchführung des Verfahrens.

(30) Priorität: 12.01.79 DE 2900979

(43) Veröffentlichungstag der Anmeldung:
23.07.80 Patentblatt 80/15

(45) Bekanntmachung des Hinweises auf die Patenterteilung:
27.04.83 Patentblatt 83/17

(84) Benannte Vertragsstaaten:
BE DE FR GB IT NL

(56) Entgegenhaltungen:
DE-B-1 224 030
DE-B-2 535 383
FR-A-2 252 186
US-A-3 668 795

(73) Patentinhaber: HOECHST AKTIENGESELLSCHAFT,
Postfach 80 03 20, D-6230 Frankfurt/Main 80 (DE)

(72) Erfinder: Moraw, Roland Dr., Buchenweg 4,
6200 Wiesbaden-Naurod (DE)
Erfinder: Schädlich, Renate, Erbsenacker 13,
6200 Wiesbaden-Naurod (DE)

# Verfahren zum Kaschieren von Schichten und Pressvorrichtung mit zwei Platten zur Durchführung des Verfahrens

Die Erfindung betrifft ein Verfahren zum Kaschieren von Schichten aus zum Teil thermoplastischen Folien zu einem Verbund durch Wärme- und Druckeinwirkung auf die miteinander zu kaschierenden Schichten, von denen zumindest eine Kernschicht, eine Fensteröffnung aufweist, und eine Pressvorrichtung mit zwei Platten zur Durchführung des Verfahrens.

Das Kaschieren thermoplastischer Folien auf andere Folien oder andere Schichten wie Papier unter Druck mit Temperatureinwirkung schafft einen festen Verbund. Davon wird u.a. bei der Herstellung von Identifikationskarten Gebrauch gemacht, indem beispielsweise eine Kernschicht mit Sicherheitsdrucken, persönlichen Daten, weiteren Informationen und Angaben sowie eventuell mit einem Bild des Karteninhabers zum Schutz vor unbefugten Veränderungen zwischen transparenten Folien einkaschiert wird.

Bei Identifikationskarten wie Scheck-, Ausweis- oder Passkarten wird durch eine Vielzahl von Sicherungsmerkmalen wie Guilloche-Drukken oder Wasserzeichen eine Nachahmung erschwert oder verhindert. Hierzu werden auch Sicherungsmerkmale wie eingelegte Mikrofilmbilder, Hologramme und Reliefgitterbilder verwendet. Diese Sicherungsmerkmale werden im allgemeinen in ein Fensterloch bzw. eine Fensteröffnung des Kartenkerns eingesetzt und durch äussere transparente Folien geschützt.

Aus der DE-A Nr. 2308876 ist eine plastifizierte Identifikationskarte bekannt, die aus einer dikkeren Klarsichtfolie, einem sicherungstechnisch hochwertig bedruckten Spezialpapier, das durch Wasserzeichen und/oder zusätzlich eingebrachte Sicherheitsmerkmale bedingte Dickenunterschiede aufweist und aus einer dünneren Klarsichtfolie besteht. Die dickere Klarsichtfolie dient als Trägerfolie und gibt der Identifikationskarte die notwendige Haltbarkeit und Steifigkeit sowie die gewünschte Dicke. Die Trägerfolie kann wahlweise die Vorder- oder Rückseite der plastifizierten Identifikationskarte darstellen. Die dünnere Klarsichtfolie dient als Deckfolie und kann ebenfalls wahlweise die Vorder- oder Rückseite der Identifikationskarte bilden. Bei dieser Identifikationskarte kann zusätzlich ein Foto in Form eines Diapositivs einplastifiziert werden. Das belichtete, entwickelte und fixierte Diapositiv ist dabei wahlweise zwischen Trägerfolie und Spezialpapier oder zwischen Spezialpapier und Deckfolie eingelegt und mitplastifiziert. Zusätzlich kann noch ein Unterschriftenfeld aus einem Spezialpapier in die Identifikationskarte eingesetzt und mit dieser mitplastifiziert werden. Bei einer anderen Ausgestaltung der Identifikationskarte wird kein zusätzlicher Spezialpapierstreifen als Unterschriftenfeld beim Plastifizieren aufgebracht, sondern das Unterschriftenfeld in der Deckfolie beim Plastifizieren ausgespart.

Beim Plastifizieren bzw. Kaschieren sind hohe Drücke und Temperaturen erforderlich, die die eingesetzten Bilder bzw. Hologramme gefährden. So führt bereits ein geringes Zerfliessen der Gelatineschicht beispielsweise bei einem fotografischen Informationsträger zu Bildverzerrungen, die bis zur Unlesbarkeit der gespeicherten Daten und Informationen führen können. Noch empfindlicher gegen Schichtversetzungen sind Hologramme. Stärker als fotografische Schichten sind Schichten mit Reliefbildern während des Kaschierens gefährdet. Diese Reliefbilder werden durch Belichten und Entwickeln von Fotolackschichten, durch Prägen von thermoplastischen Folien oder beispielsweise elektrofotografisch erzeugt, wobei im letzteren Fall eine fotoleitende, thermoplastische Aufzeichnungsschicht elektrostatisch aufgeladen, belichtet und bis zur Ausbildung des Reliefbildes erwärmt wird.

Um ein sogenanntes Zerfliessen der Sicherheitsmerkmale zu verhindern, werden gewisse Gegenmassnahmen getroffen, indem beispielsweise die Folien bei möglichst hohen Temperaturen, die über der Kaschiertemperatur liegen, geprägt werden, oder indem den fotoleitenden, thermoplastischen Aufzeichnungsschichten thermisch oder fotochemisch vernetzende Substanzen wie aromatische Azide zugesetzt werden. Diese Massnahmen reichen jedoch im allgemeinen zur Bildstabilisierung beim Kaschieren nicht aus.

Aufgabe der Erfindung ist es, ein Verfahren und eine Vorrichtung zu seiner Durchführung zu schaffen, die es ermöglichen, druck- und temperaturempfindliche Sicherungsmerkmale wie Gitterbilder, Mikrofilmbilder, Hologramme u. dgl. bildstabilisiert in einen Folienverbund einzukaschieren, ohne dass es zu Zerstörungen der in den Sicherungsmerkmalen enthaltenen Informationen kommt.

Diese Aufgabe wird durch das eingangs beschriebene Verfahren in der Weise gelöst, dass die auf die Schichten einwirkende Kaschiertemperatur in der Fensteröffnung um 10 bis 70°C gegenüber den restlichen Bereichen der Schichten abgesenkt wird.

Zusätzlich wird in der Fensteröffnung der Druck gegenüber dem Kaschierdruck auf die übrige Fläche der miteinander zu kaschierenden Schichten verringert.

In Ausgestaltung des Verfahrens wird die Kaschiertemperatur in einem engen Bereich rings um die Fensteröffnung im Vergleich zu der Kaschiertemperatur in den übrigen Bereichen ausserhalb der Fensteröffnung der zu kaschierenden Schichten erhöht.

Die weitere verfahrensmässige Ausbildung der Erfindung ergibt sich aus den Merkmalen der Patentansprüche 4 bis 6.

Zur Durchführung des Verfahrens wird eine Pressvorrichtung mit zwei spiegelsymmetrisch zueinander angeordneten, beheizten Platten, zwischen denen die miteinander zu kaschierenden Schichten einlegbar sind, verwendet, von denen jede Platte eine Öffnung mit einem eingesetzten Stempel aufweist, dessen Temperatur niedriger als die Temperatur der Platte ist.

Die weitere Ausgestaltung der Pressvorrichtung ist aus den Patentansprüchen 8 bis 19 ersichtlich.

Mit der Erfindung werden ausgezeichnete Einkaschierungen der Sicherungsmerkmale in die Identifikationskarte ohne Beeinflussung deren Informationsgehalts erhalten und ohne dass es zu Aufblähungen der Folien in der Fensteröffnung der Identifikationskarte kommt.

Die Erfindung wird im folgenden anhand der Zeichnungen näher beschrieben. Es zeigen:

Fig. 1a und 1b eine Draufsicht und eine Seitenansicht im Schnitt einer Identifikationskarte mit einkaschiertem Reliefgitter,

Fig. 2 den theoretischen und den tatsächlichen Temperaturverlauf in der Fensteröffnung während des Kaschierens der Identifikationskarte,

Fig. 3 eine Ausführungsform einer Pressvorrichtung zum Kaschieren mit zwei Platten und dazwischen liegenden, zu kaschierenden Schichten,

Fig. 4 eine gegenüber Fig. 3 abgewandelte Ausführungsform einer Pressvorrichtung, und

Fig. 5 im vergrösserten Teilschnitt eine Platte mit strukturierter Oberfläche und zurückgesetztem Stempel.

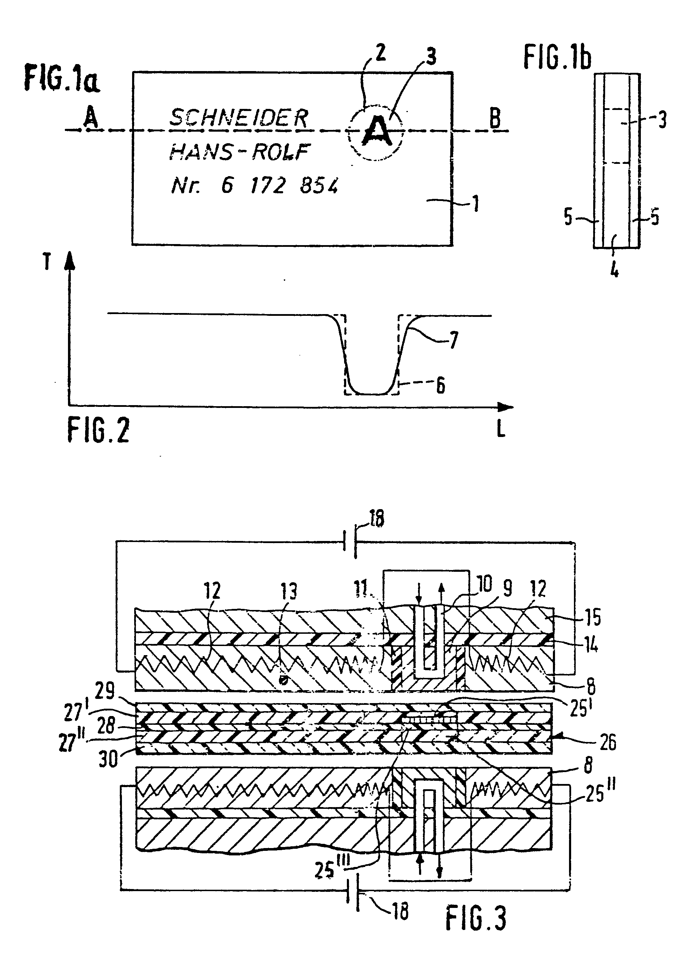

Die in den Fig. 1a und 1b gezeigte Identifikationskarte 1 besteht aus einem Kartenkern (Kernschicht 4), der eine Fensteröffnung 3 aufweist, in die ein Sicherungsmerkmal 2, beispielsweise ein Reliefgitterbild, ein Hologramm oder ein Mikrofilmbild eingesetzt ist. Der Kartenkern 4 wird auf der Vorder- und Rückseite von äusseren transparenten Folien bzw. Schichten 5 geschützt. Der Kartenkern ist mit persönlichen Daten des Karteninhabers versehen, für die stellvertretend der Zu- und Vorname des Karteninhabers und eine Kennzeichnungsnummer in der Draufsicht nach Fig. 1a stehen.

Es ist technisch äussert schwierig zu lösen, über Abstände in der Grössenordnung eines Millimeters einen Temperatursprung von einigen 10°C zu erzeugen und über eine bestimmte Zeitspanne aufrechtzuerhalten. In Fig. 2 sind zwei Temperaturprofile 6 und 7 längs der Linie A-B in Fig. 1a dargestellt. Das angestrebte und nur theoretisch erreichbare Temperaturprofil 6 in der Fensteröffnung 3 ist gestrichelt eingezeichnet und zeigt einen rechteckförmigen Verlauf. Die Temperaturübergänge beim tatsächlich auftretenden Temperaturprofil 7 erfolgen stetig. Es wird angestrebt, dass die Flankensteilheit des Temperaturverlaufs beim Übergang in die Fensteröffnung 3 möglichst gross ist. Um dies zu erreichen, wird eine Pressvorrichtung mit zwei Platten nach Fig. 3 verwendet, mit der in der Fensteröffnung 3 der zu kaschierenden Schicht die Temperatur und auch der Druck gegenüber der Kaschiertemperatur und dem Kaschierdruck in den übrigen Bereichen ausserhalb der Fensteröffnung der zu kaschierenden Schichten verringert werden können.

Die Pressvorrichtung besteht aus zwei spiegelsymmetrisch zueinander angeordneten Platten 8, zwischen denen die miteinander zu kaschierenden Schichten eingebracht werden. Jede der Platten 8 ist beheizt und weist eine Öffnung mit einem eingesetzten Stempel 9 auf. Die zu einem Verbund 26 zu kaschierenden Schichten weisen zwei Kernschichten 27', 27'' auf, die eine Stützschicht 28 einschliessen. Der Kartenkern aus den beiden Kernschichten und der Stützschicht wird von einer oberen Schutzschicht 29 und einer unteren Schutzschicht 30 abgedeckt. Die Kernschichten 27' und 27'' enthalten Fensteröffnungen 25' bzw. 25'', ebenso enthält die Stützschicht 28 eine Fensteröffnung 25''', die sich mit den Fensteröffnungen 25', 25'' deckt. Die obere Kernschicht 27' enthält in der Fensteröffnung 25' ein schematisch angedeutetes Reliefgitter. Der Folienverbund 26 wird vor dem Kaschiervorgang so in die Pressvorrichtung eingelegt, dass die Stempel 9 der beiden Platten 8 mit den Fensteröffnungen 25' bzw. 25'' zur Deckung gebracht werden. Die Stempel 9 bestehen aus einem Material wie Kupfer oder Messing mit guter Wärmeleitfähigkeit und werden durch ein System von Kanälen 10, von denen einer schematisch in dem jeweiligen Stempel 9 angedeutet ist, durchzogen. Durch die Kanäle 10 wird eine Kühlflüssigkeit, Pressluft oder bevorzugt Kohlendioxidgas geleitet. Dadurch wird erreicht, dass die Temperatur im Stempel 9 um 10 bis 70°C niedriger als in den übrigen Bereichen der Platte 8 ist. Die jeweilige Temperaturabsenkung richtet sich sowohl nach der Wärmeleitfähigkeit des Stempelmaterials als auch nach der Art des Kühlmittels und dessen Mengendurchflusses durch die Kühlkanäle.

Die Stempel 9 können auch aus einem druckfesten Material mit geringer Wärmeleitfähigkeit hergestellt werden, wobei dann jedoch keine Kühlkanäle die Stempel 9 durchziehen und stattdessen diese aus den Öffnungen der Platten 8 herausnehmbar sind. Um eine ausreichende Temperaturabsenkung im Bereich der Öffnungen zu erreichen, werden dann die Stempel 9 nach einer bestimmten Betriebszeit aus den Öffnungen der Platten 8 zum Abkühlen herausgenommen. Die gekühlten Stempel 9 sind gegenüber den Platten 8 jeweils durch eine temperaturfeste und druckstabile Füllschicht 11 thermisch isoliert. Für diese Füllschicht wird beispielsweise Polyfluoräthylen wie Teflon mit einer Dicke von 0,5 bis 2 mm verwendet.

Es wäre auch denkbar, zwischen dem Stempel 9 und der Platten 8 einen Luftspalt zur Kühlung vorzusehen, was jedoch den Nachteil mit sich bringt, dass Kaschiermaterial in diesen Luftspalt hineinfliessen könnte.

Die Aufheizung der Platten 8 erfolgt bei der Ausführungsform nach Fig. 3 indirekt durch den Kontakt mit Heizelementen in Gestalt von Widerstandsdrähten 12, die an Spannungsquellen 18 angeschlossen sind. Die Widerstandsdrähte 12 sind zusammen mit einem Temperaturfühler 13 zur Messung und Steuerung der Plattentemperatur in die Platten 8 eingesetzt. Die Widerstandsdrähte 12 sind rings um die Stempel 9 dichter als in den übrigen Bereichen der Platten 8 gepackt. Dadurch wird die Flankensteilheit des Temperatursprunges zwischen den Stempeln 9 und den Platten 8 besonders gross, da die Stempel 9 intensiv gekühlt werden und zum Ausgleich für die dadurch bedingten Wärmeverluste die Platten 8 um die Stempel 9 herum durch die dichte Packung der Widerstandsdrähte 12 stärker als die übrigen Bereiche der Platten 8 beheizt werden. Die Platten 8 werden zweckmässigerweise durch Isolierschichten 14 gegen Stützplatten 15 der Pressvorrichtung abgeschirmt.

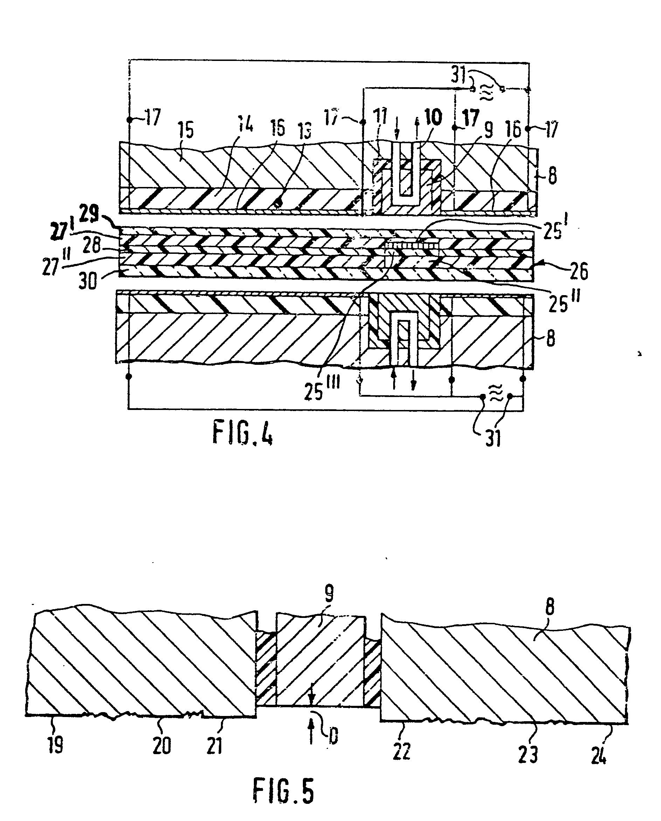

Eine weitere Ausführungsform der Pressvorrichtung ist in Fig. 4 dargestellt und umfasst Platten 8, denen eine flächenhafte Heizwiderstandsschicht 16 als Heizelement vorgeschaltet ist. Die Heizwiderstandsschicht 16 ist den zu kaschierenden Schichten zugewandt und gleichfalls durch eine Isolierschicht 14 gegen die Stützplatte thermisch abgeschirmt. An der Heizwiderstandsschicht 16 sind Kontakte 17 angebracht, die mit einer Heizspannungsquelle 31 verbunden sind. Es kann sich hierbei um eine Heizspannungsquelle handeln, die impulsförmige Spannungen an die Heizwiderstandsschicht anlegt. Der übrige Aufbau der Pressvorrichtung entspricht weitgehend der Ausführungsform nach Fig. 3 und wird daher nicht nochmals beschrieben.

Um die gewünschte Druckminderung in den Fensteröffnungen 25′, 25″ des Folienverbunds 26 zu erreichen, die dazu beiträgt, dass das Kaschieren ohne Versetzung der Informationen auf den z.B. verwendeten druckempfindlichen Reliefbildern erfolgt, ist jeder Stempel 9 in der Fensteröffnung gegenüber der Platte 8 um einen Abstand D zurückversetzt, wie dies aus Fig. 5 ersichtlich ist. Der Abstand D liegt in der Grössenordnung von 20 bis 150 µm.

Die Kontaktfläche der Platte 8 sowohl bei der Ausführungsform nach Fig. 3 als auch nach Fig. 4 kann beispielsweise strukturiert sein, wie dies in Fig. 5 dargestellt ist. In dieser strukturierten Kontaktfläche der Platte 8 sind dann glatte Bereiche 19, 20, 21, 22, 23, 24 enthalten. Die vorgegebene geometrische Anordnung der glatten Bereiche ergibt nach dem Kaschieren entsprechend glatte Oberflächenbereiche auf den äusseren thermoplastischen Folien. Ebenso können die reliefartigen Strukturen der Kontaktfläche der Platte 8 eine reproduzierbare geometrische Anordnung bilden, die auf den äusseren thermoplastischen Folien entsprechend matte Bereiche nach dem Kaschieren ergibt. Es ist offensichtlich, dass jede weitergehende Gestaltung matter bzw. glänzender Kartenbereiche in bestimmten geometrischen Anordnungen, beispielsweise in der Form eines Wappenzeichens, ein leicht zu prüfendes Sicherungsmerkmal darstellt, insbesondere dann, wenn die die Mattierung bewirkende Struktur schwer nachzuahmende Strukturen, wie beispielsweise Reliefgitterstrukturen, enthält. Zusätzlich können die Platten 8 oberflächlich aufgerauht sein, so dass die kaschierten Karten mit Ausnahme der klaren Fensteröffnung eine matte Oberfläche ohne störende Reflexion zeigen.

Mit einer Pressvorrichtung gemäss Fig. 3, bei der die Stempel 9 um 50 µm zurückversetzt waren, wurde eine 125×90 mm grosse Karte aus Polyvinylchloridfolien mit folgendem Aufbau von oben nach unten verpresst: Transparente glasklare Folie als Schutzschicht 29 mit einer Dicke von 100 µm — mattweisse Folie als Kernschicht 27′ mit einer Dicke von 140 µm und mit einem Sicherheitsdruck und einem elektrofotografisch erzeugten Kartenbild — Zwischenschicht als Stützschicht 28 aus perforiertem Papier — mattweisse Folie als Kernschicht 27″ mit einer Dicke von 140 µm und mit einem Sicherheitsdruck — transparente glasklare Folie als Schutzschicht 30 mit einer Dicke von 100 µm. Die Verpressung erfolgte bei 140°C Kaschiertemperatur und mit einem Kaschierdruck von 15 bar (kp/cm²) über eine Zeitspanne von 4 min. Es wurde mit Kohlendioxid gekühlt, das in die Kanäle 10 eingeleitet wurde. Die Karte besass Fensteröffnungen 25′, 25″, die beim Positionieren in Deckung mit den Stempeln 9 gebracht wurden. In der Fensteröffnung 25′ war ein Gitterbild aus geprägter transparenter Polyvinylchloridfolie mit einer Dicke von 120 µm und mit einem Durchmesser von 1 cm eingelegt. Auf der Seite des Gitterbildes befand sich in der Fensteröffnung 25′ eine Scheibe von 1 cm Durchmesser aus 160 µm dicker transparenter Polyesterfolie. Die Folie, die die untere Kernschicht 27″ darstellt, nahm in der Fensteröffnung eine transparente, kaschierfähige Folieneinlage auf. Die Stempel 9 hatten gleichfalls einen Durchmesser von 1 cm, während die Isolierschicht 11 1 mm stark war. Nach dem Kaschieren erstreckte sich das unversehrte Gitterbild in der Fensteröffnung 25′ des Folienverbunds 26 in einem kreisförmiger Bereich von etwa 9 mm Durchmesser.

## Patentansprüche

1. Verfahren zum Kaschieren von Schichten (5, 4, 5 bzw. 29, 27′, 28, 27″, 30) aus zum Teil thermoplastischen Folien zu einem Verbund (26) durch Wärme- und Druckeinwirkung auf die miteinander zu kaschierenden Schichten, von denen zumindest eine Kernschicht (4 bzw. 27′, 27″) eine Fensteröffnung (3; 25′, 25″) aufweist, dadurch gekennzeichnet, dass die auf die Schichten einwirkende Kaschiertemperatur in der Fensteröffnung um 10 bis 70°C gegenüber den restlichen Bereichen der Schichten abgesenkt wird.

2. Verfahren nach Anspruch 1, dadurch gekennzeichnet, dass in der Fensteröffnung (3; 25′, 25″) der Druck gegenüber dem Kaschierdruck auf die übrige Fläche der miteinander zu kaschierenden Schichten verringert wird.

3. Verfahren nach Anspruch 1, dadurch gekennzeichnet, dass die Kaschiertemperatur in einem engen Bereich rings um die Fensteröffnung (3; 25′, 25″) im Vergleich zu der Kaschiertemperatur in den übrigen Bereichen ausserhalb der Fensteröffnung der zu kaschierenden Schichten erhöht wird.

4. Verfahren nach den Ansprüchen 1 bis 3, dadurch gekennzeichnet, dass die Oberfläche in der Fensteröffnung (3; 25′, 25″) durch äussere Schutzschichten (5, 5; 29, 30) beim Kaschieren glatt und im übrigen matt ausgebildet wird.

5. Verfahren nach Anspruch 4, dadurch gekennzeichnet, dass in dem matten Bereich während des Kaschiervorgangs weitere glatte Bereiche (19 bis 24) ausgebildet werden, die eine vorgegebene geometrische Gestalt besitzen.

6. Verfahren nach den Ansprüchen 1 bis 5, dadurch gekennzeichnet, dass Kernschichten (27', 27'') eine Stützschicht (28) einschliessen, dass in eine Fensteröffnung (25'') der unteren Kernschicht (27'') eine kaschierfähige Folieneinlage vor dem Aufkaschieren der unteren Schutzschicht (30) eingelegt wird, dass eine Fensteröffnung (25') der oberen Kernschicht (27') durch eine entsprechend geformte Kaschierpresse während des Kaschierens offengehalten wird, dass Gitterbilder mit einem erwärmten Prägestempel (9) durch die obere Fensteröffnung (25') hindurch der darunter liegenden Stützschicht (28) aufgeprägt werden, und dass danach eine nichtkaschierfähige transparente Folieneinlage in die obere Fensteröffnung (25') eingesetzt und eine obere Schutzschicht (29) unter Schonung des innenliegenden Gitterbildes aufkaschiert wird.

7. Pressvorrichtung mit zwei spiegelsymmetrisch zueinander angeordneten, beheizten Platten (8), zwischen denen die miteinander zu kaschierenden Schichten einlegbar sind, zur Durchführung des Verfahrens nach den Ansprüchen 1 bis 6, dadurch gekennzeichnet, dass jede Platte (8) eine Öffnung mit einem eingesetzten Stempel (9) aufweist, dessen Temperatur niedriger als die Temperatur der Platte (8) ist.

8. Pressvorrichtung nach Anspruch 7, dadurch gekennzeichnet, dass der Stempel (9) gegenüber der Platte (8) durch eine temperaturfeste und druckstabile Füllschicht (11) thermisch isoliert ist.

9. Pressvorrichtung nach den Ansprüchen 7 und 8, dadurch gekennzeichnet, dass die Füllschicht (11) aus Polyfluoräthylen wie Teflon besteht und eine Dicke von 0,5 bis 2 mm aufweist.

10. Pressvorrichtung nach den Ansprüchen 7 bis 9, dadurch gekennzeichnet, dass der Stempel (9) aus einem Material mit guter Wärmeleitfähigkeit besteht und von einem System von Kanälen (10) durchzogen ist, durch die ein Kühlmittel hindurchfliesst.

11. Pressvorrichtung nach Anspruch 10, dadurch gekennzeichnet, dass das Kühlmittel eine Kühlflüssigkeit, Pressluft oder Kohlendioxidgas ist.

12. Pressvorrichtung nach den Ansprüchen 7 bis 9, dadurch gekennzeichnet, dass der Stempel (9) aus einem druckfesten Material mit geringer Wärmeleitfähigkeit besteht, und dass der Stempel (9) aus der Öffnung der Platte (8) herausziehbar ist.

13. Pressvorrichtung nach den Ansprüchen 7 bis 12, dadurch gekennzeichnet, dass der Stempel (9) gegenüber der Kaschierfläche der Platte (8) innerhalb der Öffnung um 20 bis 150 µm zurückversetzt ist.

14. Pressvorrichtung nach den Ansprüchen 7 bis 13, dadurch gekennzeichnet, dass in jeder Platte (8) Heizelemente in Gestalt von Widerstandsdrähten (12) eingesetzt sind, und dass die Widerstandsdrähte rings um den Stempel (9) dichter gepackt sind als in den übrigen Bereichen der Platte (8).

15. Pressvorrichtung nach den Ansprüchen 7 bis 13, dadurch gekennzeichnet, dass die Platte (8) als Heizelement eine flächenhafte Heizwiderstandsschicht (16) enthält, die den miteinander zu kaschierenden Schichten zugewandt ist, und dass an dieser Heizwiderstandsschicht (16) Kontakte (17) angebracht sind, die mit einer Heizspannungsquelle (31) verbunden sind.

16. Pressvorrichtung nach den Ansprüchen 7 bis 14, dadurch gekennzeichnet, dass eine Isolierschicht (14) die Heizelemente (12, 16) gegen eine Stützplatte (15) abschirmt.

17. Pressvorrichtung nach den Ansprüchen 7 bis 16, dadurch gekennzeichnet, dass die Kontaktfläche der Platte (8) strukturiert ist.

18. Pressvorrichtung nach Anspruch 17, dadurch gekennzeichnet, dass in vorgegebener geometrischer Anordnung glatte Bereiche (19 bis 24) in der strukturierten Kontaktfläche der Platte (8) enthalten sind.

19. Pressvorrichtung nach den Ansprüchen 7 bis 18, dadurch gekennzeichnet, dass der Stempel (9) in der Platte (8) so positioniert ist, dass er sich mit der oberen Fensteröffnung (25') in der oberen Kernschicht (27') während des Kaschiervorgangs deckt.

**Revendications**

1. Procédé pour le laminage, en plaques composites, de couches (5, 4, 5 ou 29, 27', 28, 27'', 30) constituées partiellement de feuilles thermoplastiques, sous l'effet de la chaleur et de la pression agissant sur les couches à laminer, dont au moins une des couches constituant l'âme (4, 27', 27'') comporte une ouverture à fenêtre (3; 25', 25''), caractérisé en ce qu'à la hauteur de l'ouverture à fenêtre, la température est de 10 à 70°C inférieure à la température de laminage réalisée dans la surface restante des couches à laminer.

2. Procédé selon la revendication 1, caractérisé en ce qu'à la hauteur de l'ouverture à fenêtre (3; 25', 25''), on applique une pression inférieure à la pression de laminage appliquée à la surface restante des couches à laminer.

3. Procédé selon la revendication 1, caractérisé en ce que, dans une zone étroite encadrant l'ouverture à fenêtre (3; 25', 25''), on applique une température supérieure à la température de laminage appliquée sur les couches à laminer en dehors de cette zone périphérique de l'ouverture à fenêtre.

4. Procédé selon les revendications 1 à 3, caractérisé en ce que, lors du laminage, la face supérieure dans l'ouverture à fenêtre (3; 25', 25''), revêtue de couches de protection extérieures (5, 5; 29, 30), garde un aspect lisse, alors que tout le reste prend un aspect mat.

5. Procédé selon la revendication 4, caractérisé en ce que, pendant le processus de laminage, la zone mate est assortie d'autres zones lisses (19 à 24) qui présentent une forme géométrique déterminée.

6. Procédé selon les revendications 1 à 5, caractérisé en ce que les couches (27', 27") de l'âme enrobent une couche de renforcement (28), en ce qu'avant la mise en place par le processus de laminage de la couche de protection inférieure (30), on insère une garniture pouvant être laminée dans l'une des ouvertures à fenêtre (25") ménagée dans la couche inférieure (27") de l'âme, en ce qu'une ouverture à fenêtre (25') ménagée dans la couche supérieure (27') de l'âme est maintenue ouverte pendant le processus de laminage par une presse à laminer appropriée, en ce que par l'ouverture à fenêtre supérieure (25') des images en relief sont appliquées sous une forme gaufrée à l'aide d'un poinçon chauffé (9) sur la couche de renforcement (28) placée au-dessous de cette ouverture (25'), et en ce que, finalement, une garniture transparente non laminable est insérée dans l'ouverture à fenêtre supérieure (25') avant d'être protégée par une couche de protection supérieure (29) appliquée par un processus de laminage sans risque d'endommagement de l'image en relief placée à l'intérieur.

7. Presse comportant deux plateaux chauffés, placés en position symétrique par rapport à un miroir, entre lesquels on place les couches à laminer en vue de la mise en œuvre du procédé défini dans les revendications 1 à 6, caractérisée en ce que chacun de ces plateaux (8) comporte une ouverture recevant un poinçon (9) dont la température est inférieure à la température du plateau (8).

8. Presse selon la revendication 7, caractérisée en ce que le poinçon (9) est isolé par rapport au plateau (8) par un isolant thermique réalisé sous la forme d'une couche d'un produit de remplissage (11) résistant à la chaleur et à la compression.

9. Presse selon les revendications 7 et 8, caractérisée en ce que la couche du produit de remplissage (11) est constituée de polyfluoréthy-lène, tel le Téflon par exemple, ayant une épaisseur comprise entre 0,5 et 2 mm.

10. Presse selon les revendications 7 à 9, caractérisée en ce que le poinçon (9) est réalisé dans un matériau bon conducteur thermique, irrigué par un système de canaux (10) conduisant un produit de refroidissement.

11. Presse selon la revendication 10, caractérisée en ce que le produit de refroidissement est un liquide de refroidissement, de l'air comprimé ou du gaz carbonique.

12. Presse selon les revendications 7 à 9, caractérisée en ce que le poinçon (9) est réalisé dans un matériau à haute résistance à la compression et à faible conductivité thermique, et en ce que le poinçon (9) peut être extrait de son logement ménagé dans le plateau (8).

13. Presse selon les revendications 7 à 12, caractérisée en ce que, dans son logement, le poinçon (9) est placé en retrait par rapport à la surface de laminage, sur une distance comprise entre 20 et 150 μm.

14. Presse selon les revendications 7 à 13, caractérisée en ce que chacun des plateaux (8) est équipé d'éléments de chauffage constitués de fils de résistance électrique (12), dont la densité des fils est plus importante dans la zone périphérique du poinçon (9) que dans les autres secteurs du plateau (8).

15. Presse selon les revendications 7 à 13, caractérisée en ce que le plateau (8) est équipé d'un élément chauffant sous la forme d'une résistance plate (16) tournée vers les couches à assembler, et en ce que cette résistance plate (16) est reliée à une source de tension de chauffage (31) par l'intermédiaire de contacts (17).

16. Presse selon les revendications 7 à 14, caractérisée en ce qu'une couche isolante (14) assure l'isolation entre les éléments chauffants (12, 16) et la plaque de renforcement (15).

17. Presse selon les revendications 7 à 16, caractérisée en ce que la surface de contact du plateau (8) comporte des empreintes.

18. Presse selon la revendication 17, caractérisée en ce que les empreintes de la surface de contact du plateau (8) comporte des surfaces lisses (19 à 24) réparties selon une disposition géométrique déterminée.

19. Presse selon les revendications 7 à 18, caractérisée en ce que le poinçon (9) logé dans le plateau (8) est positionné de manière que, pendant l'opération de laminage, il couvre l'ouverture à fenêtre supérieure (25') ménagée dans la couche supérieure (27') de l'âme.

**Claims**

1. Process for laminating layers (5, 4, 5, resp. 29, 27', 28, 27", 30) of partially thermoplastic films to a bond (26) by action of heath and pressure on the layers which are to be laminated, of which a core layer (4, resp. 27', 27") has at least one window area (3; 25', 25"), characterized in that the laminating temperature acting on the layers is lowered in the window area by 10 to 70°C, compared to the other areas of the layers.

2. Process as claimed in claim 1, characterized in that the pressure in the window area (3; 25', 25") is lowered, compared to the laminating pressure on the remaining surface of the layers which are to be laminated.

3. Process as claimed in claim 1, characterized in that the laminating temperature in a narrow area around the window area (3; 25', 25") is increased, compared to the laminating temperature in the other areas outside the window area of the layers which are to be laminated.

4. Process as claimed in claims 1 to 3, characterized in that the surface within the window area (3; 25', 25") gets a smooth aspect by outer protective layers (5, 5; 29, 30) during lamination and otherwise a matt aspect.

5. Process as claimed in claim 4, characterized in that further smooth areas (19 to 24), which have a given geometric shape, are formed in the matt areas during the lamination process.

6. Process as claimed in claims 1 to 5, characterized in that core layers (27', 27") include a support layer (28), in that a film insert, capable of lamination, in a window opening (25") of the lower core layer (27") is inserted, before the lower protective layer (30) is laminated, in that a window opening (25') of the upper core layer (27') is kept open during the lamination process by a laminating press which is correspondingly formed, in that grid images are embossed with a heated plug (9) through the upper window opening (25') onto the support layer (28) situated beneath it, and in that a transparent film insert which is not capable of lamination is inserted afterwards in the upper window opening (25') and an upper protective layer (29) is laminated, the grid image, situated inside, being saved.

7. Pressing device with two mirrors symmetrically arranged, heated plates (8) between which the layers to be laminated together can be inserted for carrying out the process as claimed in claims 1 to 6, characterized in that each plate (8) has an opening with an inserted plug (9), the temperature of which is lower than the temperature of the plate (8).

8. Pressing device as claimed in claim 7, characterized in that the plug (9) is thermally insulated by a temperature and pressure resistent filling layer (11) against the plate (8).

9. Pressing device as claimed in claims 7 and 8, characterized in that the filling layer (11) consists of polyfluoroethylene such as Teflon and has a thickness of 0.5 to 2 mm.

10. Pressing device as claimed in claims 7 to 9, characterized in that the plug (9) consists of a material having a good thermal conductivity and includes a system of channels (10) through which a cooling agent flows.

11. Pressing device as claimed in claim 10, characterized in that the cooling agent is a cooling liquid, compressed air or carbon dioxide.

12. Pressing device as claimed in claims 7 to 9, characterized in that the plug (9) consists of a pressure resistent material of low thermal conductivity and in that the plug (9) is removable from the opening of plate (8).

13. Pressing device as claimed in claims 7 to 12, characterized in that the plug (9) is recessed within the opening by 20 to 150 μm with respect to the lamination surface of the plate (8).

14. Pressing device as claimed in claims 7 to 13, characterized in that heating elements in form of resistance wires (12) are inserted in each plate (8) and in that the resistance wires are packed more closely around the plug (9) than in the other areas of the plate (8).

15. Pressing device as claimed in claims 7 to 13, characterized in that the plate (8) comprises a laminar heating resistent layer (16) as heating element facing the layers which are to be laminated together and in that contacts (17), joint to a heating voltage source (31), are applied onto this heating resistent layer (16).

16. Pressing device as claimed in claims 7 to 14, characterized in that an insulating layer (14) screens the heating elements (12, 16) from a supporting plate (15).

17. Pressing device as claimed in claims 7 to 16, characterized in that the contact surface of the plate (8) is structured.

18. Pressing device as claimed in claim 17, characterized in that smooth areas (19 to 24) are included in a given geometric arrangement in the structured contact surface of plate (8).

19. Pressing device as claimed in claims 7 to 18, characterized in that the plug (9) is disposed in the plate (8) in such a way that it is, during the lamination process, congruent with the upper window opening (25') in the upper core layer (27').

**FIG.1a**

SCHNEIDER
HANS-ROLF
Nr. 6 172 854

**FIG.1b**

**FIG.2**

**FIG.3**

FIG.4

FIG.5